# EUROPÄISCHE PATENTSCHRIFT

(11) **EP 1 475 624 B1**
(45) Veröffentlichungstag und Bekanntmachung des Hinweises auf die Patenterteilung: **18.01.2006**
(21) Anmeldenummer: 03010475.6
(22) Anmeldetag: 09.05.2003
(51) Int. Cl.: G01L 27/00

(54) **Kolbendruckwaage**
Calibration scale
Balance de calibration

(43) Veröffentlichungstag der Anmeldung: 10.11.2004
(73) Patentinhaber: WIKA Alexander Wiegand GmbH & Co.KG, 63911 Klingenberg/Main (DE)
(72) Erfinder: Hahn, Günter Dr., 63897 Miltenberg (DE); Splitthoff, Christian, 63906 Erlenbach (DE); Halburt, Mark, 83112 Donetsk (UA); Häfner, Alfred, 63849 Miltenberg (DE); Elbert, Christian, 63849 Leidersbach (DE)
(74) Vertreter: TBK-Patent

(56) Entgegenhaltungen:
- GB-A- 2 086 047
- US-A- 5 259 235
- US-B1- 6 471 252

## Beschreibung

Die Erfindung bezieht sich auf eine Kolbendruckwaage mit den Merkmalen des Oberbegriffs von Patentanspruch 1. Ferner bezieht sich die Erfindung auf einen ringförmigen Gewichtskörper für eine Kolbendruckwaage.

Eine Kolbendruckwaage, die mit Ausnahme des Merkmals, dass der Zylinderhalter ein getrennt von der Anschlusseinheit ausgebildetes Bauteil ist, die Merkmale des Oberbegriffs von Patentanspruch 1 aufweist, ist bekannt durch das Typenblatt "Drucknormale-Typen 5300-5200 und 5500" der Firma Desgranges & Huot GmbH, Deutschland, Nieder-Roden, Rosenring 29.

Eine solche Kolbendruckwaage wird üblicherweise angewendet als Drucknormal in Labors und Messwerkstätten, um Druckmessgeräte hinsichtlich ihrer Genauigkeit zu überprüfen und gegebenenfalls zu eichen. Zu diesem Zweck werden auf den Kolbenteller ein oder mehrere kalibrierte Gewichtskörper aufgelegt, wobei die Gewichtskörper üblicherweise am Kolbenteller mittels einer zylindrischen Glocke gehalten werden. Dann wird der Druck des Druckfluids in der Druckkammer erhöht, bis sich der Kolben anhebt und "frei" auf dem Druckfluid "steht". Für den dabei herrschenden Druck p gilt mit hoher Genauigkeit p = m x g / A, wobei m die Summe aus der Masse des Kolbens und der diesen belastenden Massen ist, insbesondere der Massen der Gewichtskörper und der gegebenenfalls eingesetzten Glocke, g die Erd- bzw. Gravitationsbeschleunigung ist und A die druckbelastete Querschnittsfläche des Kolbens ist. Durch Auflegen mehrerer Gewichtskörper bzw. durch Austausch der Gewichtskörper und dementsprechende Änderung des Drucks in der Druckkammer können somit mehrere verschiedene Druckwerte innerhalb eines gewünschten Mess- bzw. Prüfbereichs zur Verfügung gestellt werden.

Bei der bekannten Kolbendruckwaage ist ferner vorgesehen, dass der Kolben und der Zylinder ausgetauscht werden können, damit Kolben mit voneinander verschiedenen Querschnittsflächen A eingesetzt werden können und auf diese Weise Druckwerte in voneinander verschiedenen Mess- bzw. Prüfbereichen gemessen und für die Prüfung zur Verfügung gestellt werden können.

Bei der bekannten Kolbendruckwaage sind der Zylinderhalter und die Anschlusseinheit als einstückiges Bauteil bzw. einstückiger Block ausgebildet. Dieser Block umschließt auch den Zylinder und trägt an seinem oberen Ende eine Kronenmutter, mittels der der Zylinder im Block gesichert und eingespannt ist. Um den Kolben und den zugeordneten Zylinder ausbauen und gegen einen anderen Kolben mit zugeordnetem Zylinder austauschen zu können, muss zunächst ein Sicherungsbolzen gelöst werden, der die Kolbenbewegung nach oben begrenzt, wonach der Kolben aus dem Zylinder herausgezogen wird. Dann wird die Kronenmutter gelöst, damit der Zylinder aus dem Block herausgezogen werden kann. Das Einsetzen des neuen Zylinders und des neuen Kolbens erfolgt in umgekehrter Reihenfolge. Dieser Austauschvorgang ist vergleichsweise kompliziert und zeitaufwendig. Ferner hat dieser Austauschvorgang den Nachteil, dass der Kolben vom Zylinder getrennt wird, so dass die Gefahr besteht, dass der Kolben auf seiner Oberfläche verunreinigt wird oder sogar korrodiert. Dies beeinträchtigt die freie Bewegung des Kolbens in der Kolbenbohrung und damit die Messgenauigkeit.

Eine Kolbendruckwaage mit den Merkmalen des Oberbegriffs von Patentanspruch 1 ist bekannt durch das Dokument US-A-5 259 235. Bei dieser bekannten Kolbendruckwaage ist der Zylinderhalter mit einem Gewindezapfen versehen, mittels dessen der Zylinderhalter mit der Anschlusseinheit verschraubt ist. Durch den Gewindezapfen verläuft eine Axialbohrung, die in die Druckkammer mündet. Der Austausch von Kolben und Zylinder wird in diesem Dokument nicht erörtert.

Je nach dem Einsatzort der Kolbendruckwaage kann die Erd- bzw. Gravitationsbeschleunigung unterschiedlich sein. Damit dies nicht zu Verfälschungen der Druckmessung führt, ist es üblich, die Masse der Gewichtskörper der Gravitationsbeschleunigung am Einsatzort der Kolbendruckwaage anzupassen. Eine hierzu bekannte Möglichkeit besteht darin, den einzelnen Gewichtskörper mit "Untermaß" zu fertigen, d.h. mit zu geringer Masse, und im Gewichtskörper eine Kammer auszubilden, in die Ausgleichsgewichte gegeben werden können, um dadurch die Masse des Gewichtskörpers auf das durch den Einsatzort vorgegebene Sollmaß zu bringen. Diese Kammer ist üblicherweise mit drei Schrauben verschlossen. Eine weitere Möglichkeit besteht darin, den einzelnen Gewichtskörper zunächst mit "Übermaß" zu fertigen, d.h. mit zu großer Masse, und dann die Masse des Gewichtskörpers dadurch auf das vorgegebene Sollmaß abzugleichen, das auf der Rückseite des Gewichtskörpers kleine Bohrungen ausgebildet werden. Diese bekannten Maßnahmen haben den Nachteil, dass sich in den Bohrungen oder am Verschluss der Kammer Verunreinigungen ablagern können, die dann die Masse des Gewichtskörpers verfälschen.

Der Erfindung liegt die Aufgabe zugrunde, die gattungsgemäße Kolbendruckwaage dahingehend weiterzubilden, dass der Austausch von Kolben und Zylinder auf einfachere Weise als bisher durchgeführt werden kann und möglichst so durchgeführt werden kann, dass einer Verschmutzung des Kolbens vorgebeugt ist. Ferner liegt der Erfindung die Aufgabe zugrunde, einen Gewichtskörper für eine Kolbendruckwaage zu schaffen, der die vorstehend erläuterten Nachteile der herkömmlichen Gewichtskörper nicht aufweist.

Hinsichtlich der Kolbendruckwaage wird die Aufgabe gelöst durch die Kolbendruckwaage gemäß Patentanspruch 1.

Die erfindungsgemäße Kolbendruckwaage ermöglicht es, den Kolben und den ihm zugeordneten Zylinder dadurch gegen einen anderen Kolben und anderen Zylinder auszutauschen, dass die Steckverbindung gelöst wird und die Sicherungsfunktion der Haltevorrichtung aufgehoben wird. Bei diesem Austauschvorgang bleiben der Zylinderhalter, der Zylinder und der Kolben als Kolben-Zylinder-System miteinander verbunden, das als Ganzes ausgetauscht wird. Dies ermöglicht einen schnellen Austausch. Dabei wird der Kolben nicht vom zugeordneten Zylinder getrennt. Vielmehr verbleibt er innerhalb des Kolben-Zylinder-Systems, so dass er vor Verunreinigungen und Beschädigungen geschützt ist. Dies gewährleistet hohe Messgenauigkeit auch bei häufigem Austausch eines Kolben-Zylinder-Systems gegen ein anderes.

Hinsichtlich des Gewichtskörpers wird die vorstehend genannte Aufgabe durch den ringförmigen Gewichtskörper gemäß Anspruch 5 gelöst. Dadurch, dass bei dem erfindungsgemäßen Gewichtskörper an einer der beiden Stirnseiten der Buchse Material abgedreht wird, um dadurch die Masse des Gewichtskörpers auf das vorgegebene Sollmaß zu bringen, hat der Gewichtskörper auch nach dem Abgleichen nur glatte Oberflächen, so dass sich keine Schmutzablagerungen in Bohrungen oder an Schrauben bilden können. Ferner ist der Gewichtskörper "aus einem Stück" gefertigt, da Lufteinschlüsse sowie die Ausgleichsgewichte entfallen.

Vorteilhafte Ausgestaltungen der erfindungsgemäßen Kolbendruckwaage sind in den Unteransprüchen 2 bis 4 definiert.

Ausführungsbeispiele der Erfindung sind in den Zeichnungen dargestellt und werden im folgenden näher erläutert. Es zeigen:
Figur 1 einen Längsschnitt durch ein Kolben-Zylinder-System einer Ausführungsform einer erfindungsgemäßen Kolbendruckwaage;
Figur 2 einen Längsschnitt, teilweise in Ansicht, durch eine Anschlusseinheit der Ausführungsform der erfindungsgemäßen Kolbendruckwaage;
Figur 3 eine ausschnittsweise Schnittdarstellung gemäß A-B in Figur 2;
Figur 4 eine Darstellung, teilweise in Ansicht und teilweise im Schnitt, einer abgewandelten Ausführungsform einer erfindungsgemäßen Kolbendruckwaage; und
Figur 5 einen Gewichtskörper im Längsschnitt.

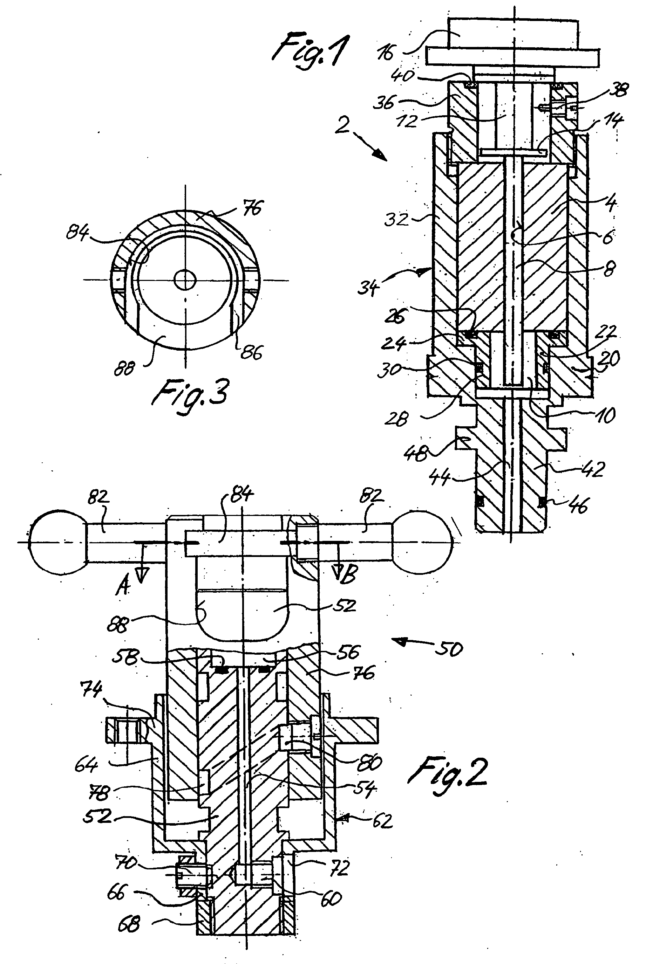

Die in den Figuren 1 bis 3 gezeigte Ausführungsform einer Kolbendruckwaage umfasst ein Kolben-Zylinder-System 2 und eine Anschlusseinheit 50.

Das in Figur 1 gezeigte Kolben-Zylinder-System 2 umfasst einen Zylinder 4 mit einer kreiszylindrischen Mantelfläche und zwei ebenen Stirnflächen. Axial durch den Zylinder 4 verläuft eine an beiden Enden offene Kolbenbohrung 6. In die Kolbenbohrung 6 ist ein stangenförmiger Kolben 8 gleitend verschiebbar eingepasst. Der Kolben 8 steht durch die untere Stirnfläche des Zylinders 4 nach unten in eine Druckkammer 10 vor, die in Betrieb der Kolbendruckwaage mit einem Druckfluid gefüllt ist, bei dem es sich sowohl um ein Gas als auch um eine Flüssigkeit, beispielsweise ein geeignetes Öl, handeln kann.

Der Zylinder 4 und der Kolben 8 bestehen vorzugsweise aus einem Werkstoff, der verschleißfest ist und einen niedrigen Temperaturausdehnungskoeffizienten aufweist. Ein in diesem Sinne geeigneter Werkstoff ist Wolframcarbid.

Der Kolben 8 ragt ferner durch die obere Stirnfläche des Zylinders 4 aus der Kolbenbohrung 6 heraus und geht über in einen verdickten Kolbenabschnitt 12, wobei sich am Übergang zum Kolbenabschnitt 12 ein Bund 14 befindet. An seinem oberen Ende geht der verdickte Kolbenabschnitt 12 über in einen Kolbenteller 16. Der Kolbenteller 16 ist derart geformt, dass auf diesen eine Glocke 18 lösbar aufgesetzt werden kann, von der in Figur 4 lediglich die rechte Hälfte im Schnitt gezeigt ist.

Im Betrieb soll die Kolbendruckwaage stets so ausgerichtet sein, dass die Achse des Kolbens 8 genau senkrecht verläuft, d.h. genau in Richtung zum Gravitationsmittelpunkt der Erde. Ferner ist die Kolbendruckwaage stets so ausgerichtet, dass die Druckkraft, die vom Druck des Druckfluids in der Druckkammer 10 auf den Kolben 6 ausgeübt wird, genau entgegen der Schwerkraft wirkt. Dementsprechend befindet sich die Druckkammer 10 unterhalb des Zylinders 4 und befindet sich der Kolbenteller 16 oberhalb des Zylinders 4. Die Begriffe "oben" und "oberhalb" und ähnliche Begriffe sowie die Begriffe "unten" und "unterhalb" und ähnliche Begriffe beziehen sich auf diese im Betrieb vorhandene Ausrichtung der Kolbendruckwaage und beziehen sich zugleich auf die Figuren 1, 2 und 4.

Unterhalb des Zylinders 4 befindet sich ein ringförmiger Zylinderhalter 20, der den Kolben 8 von unten abstützt. Der Zylinder 4 und der Zylinderhalter 20 begrenzen gemeinsam die Druckkammer 10. Beim dargestellten Ausführungsbeispiel ist zwischen dem Zylinder 4 und dem Zylinderhalter 20 eine hutförmige Dichtbuchse 22 eingesetzt, die einen ringförmigen Kragen 24, der zwischen einer Schulter des Zylinderhalters 20 und der unteren Stirnfläche des Zylinders 4 angeordnet ist und eine Dichtung 26 trägt, sowie einen zylindrischen Abschnitt 28 aufweist, der in die zylindrische Öffnung des Zylinderhalters 20 eingepasst ist und ebenfalls eine Dichtung 30 trägt.

Am Zylinderhalter 20 ist eine Zylinderhülse 32 ausgebildet, die vom Zylinderhalter 20 aus nach oben verläuft und den Zylinder 4 umgibt, der in die Innenbohrung der Zylinderhülse 32 eingepasst ist. Auf diese Weise bilden der Zylinderhalter 20 und die Zylinderhülse 32 gemeinsam ein Zylindergehäuse 34 für den Zylinder 4. In das obere Ende der Zylinderhülse 32 ist eine Gewindehülse 36 geschraubt, die an der oberen Stirnfläche des Zylinders 4 anliegt und den Zylinder 4 nach unten gegen den Zylinderhalter 20 spannt.

Die Gewindehülse 36 umgibt den Kolbenabschnitt 12 größeren Durchmessers und trägt einen Sicherungsbolzen 38, der radial soweit zum Kolbenabschnitt 12 vorsteht, dass der Bund 14 in Anlage am Sicherungsbolzen 38 treten kann, wenn der Kolben 8 nach oben bewegt wird. Auf diese Weise verhindert der Sicherungsbolzen 38, dass der Kolben 8 zu weit nach oben und aus der Kolbenbohrung 6 herausgeschoben wird. An ihrem oberen Ende trägt die Gewindehülse 36 einen elastischen Ring 40, auf dem der Kolbenteller 16 aufsitzt, solange der Druck in der Druckkammer 10 nicht ausreicht, um den Kolbenteller 16 anzuheben.

Am unteren Ende des Zylinderhalters 20 ist ein Zapfen 42 angeordnet, der beim dargestellten Ausführungsbeispiel einstückig mit dem Zylinderhalter 20 ausgebildet und koaxial zum Kolben 8 angeordnet ist. Der Zapfen 42 ist mit einer Axialbohrung 44 versehen, die in die Druckkammer 10 mündet, hat eine kreiszylindrische Mantelfläche und trägt nahe seinem unteren Ende eine Ringdichtung 46. Wie in Figur 1 erkennbar ist, ist am Zapfen 42 ein umlaufender Bund 48 ausgebildet, der sich, in Axialrichtung betrachtet, zwischen der Unterseite des Zylinderhalters 20 und der Ringdichtung 46 befindet.

Figur 2 zeigt die Anschlusseinheit 50, die mit dem Kolben-Zylinder-System 2 gemäß Figur 1 zu der Kolbendruckwaage verbindbar ist und im verbundenen Zustand das Kolben-Zylinder-System 2 trägt. Die Anschlusseinheit 50 wird wegen dieser tragenden Funktion bisweilen auch als "Basement" bezeichnet. Die Anschlusseinheit 50 umfasst ein im wesentlichen zylinderförmiges Kernelement 52, entlang dessen Achse ein Fluidkanal 54 verläuft. Im oberen Ende des Kernelementes 52 ist ein Zapfenloch 56 ausgebildet, in das der Fluidkanal 54 mündet und das komplementär zum Zapfen 42 unterhalb des Bundes 48 geformt ist, so dass der Zapfen 42 in das Zapfenloch 56 eingesetzt werden kann, wobei zwischen dem Zapfen 42 und dem Zapfenloch 56 eine Spielpassung besteht. Am Boden des Zapfenloches 56 befindet sich eine Ringdichtung 58, die an der Stirnfläche des Zapfens 42 dichtet, wenn dieser in das Zapfenloch 56 eingesetzt ist. Die Ringdichtung 46 dichtet dann zwischen der Mantelfläche des Zapfens 42 und dem Zapfenloch 56 ab. Gegebenenfalls kann eine der beiden Ringdichtungen 46 und 58 entfallen.

Der Fluidkanal 54 geht an seinem unteren Ende in eine radial verlaufende Bohrung über, die einen Fluidanschluss 60 bildet. An den Fluidanschluss 60 kann eine nicht dargestellte Leitung angeschlossen werden, mittels der der Kolbendruckwaage das Druckfluid zugeführt wird. Dieses gelangt vom Fluidanschluss 60 durch den Fluidkanal 54 und die Axialbohrung 44 in die Druckkammer 10, wobei die Ringdichtungen 58 und 46 sowie die Dichtungen 30 und 26 für Fluiddichtheit sorgen.

Die Anschlusseinheit 50 umfasst ferner eine zylindrische Hülse 62, die einen Hülsenabschnitt 64 mit größerem Durchmesser und einen Hülsenabschnitt 66 mit kleinerem Durchmesser aufweist. Der Hülsenabschnitt 66 mit kleinerem Durchmesser ist auf das untere Ende des Kernelementes 52 aufgepasst und daran mittels einer Mutter 68 befestigt und mittels einer gekonterten Madenschraube 70 in Umfangsrichtung gesichert. Im Bereich des Fluidanschlusses 60 weist der Hülsenabschnitt 66 eine Öffnung 72 auf. Der Hülsenabschnitt 64, der sich vom Hülsenabschnitt 66 aus nach oben erstreckt, hat einen Innendurchmesser, der größer ist als der Außendurchmesser des Kernelementes 52, so dass zwischen dem Hülsenabschnitt 64 und dem Kernelement 52 ein ringförmiger Zwischenraum vorhanden ist. Nahe dem oberen Ende des Hülsenabschnitts 64 ist an diesem ein ringförmiger Befestigungsflansch 74 angeformt, der ein Befestigungsmittel bildet, mittels dessen die gesamte Anschlusseinheit 50 und, wenn diese mit dem Kolben-Zylinder-System 2 verbunden ist, die gesamte Kolbendruckwaage an einem nicht dargestellten tragenden Bauteil befestigt werden kann.

Ferner weist die Anschlusseinheit 50 eine zylindrische Spannhülse 76 auf. Diese ist derart auf das Kernelement 52 aufgepasst, dass sie relativ zum Kernelement in Axialrichtung verschoben und in Umfangsrichtung gedreht werden kann. Mit ihrem unteren Ende ragt die Spannhülse 76 in den Zwischenraum zwischen dem Kernelement 52 und dem Hülsenabschnitt 64 der Hülse 62. In der zylindrischen Mantelfläche des Kernelementes 52 ist eine schraubenlinienförmige Führungsnut 78 ausgebildet, die in Figur 2 teilweise gestrichelt dargestellt ist. In die Spannhülse 76 ist ein Führungsstift 80 geschraubt, dessen freies Ende in die Führungsnut 78 vorsteht. Aufgrund des Eingriffs zwischen dem Führungsstift 80 und der Führungsnut 78 führt eine Drehung der Spannhülse 76 relativ zum Kernelement 52 dazu, dass die Spannhülse 76 entlang dem Kernelement 52 in Axialrichtung verschoben wird. Am oberen Ende der Spannhülse 76 sind zwei radial vorstehende Arme 82 befestigt, die es erleichtern, die Spannhülse 76 relativ zum Kernelement 52 zu drehen.

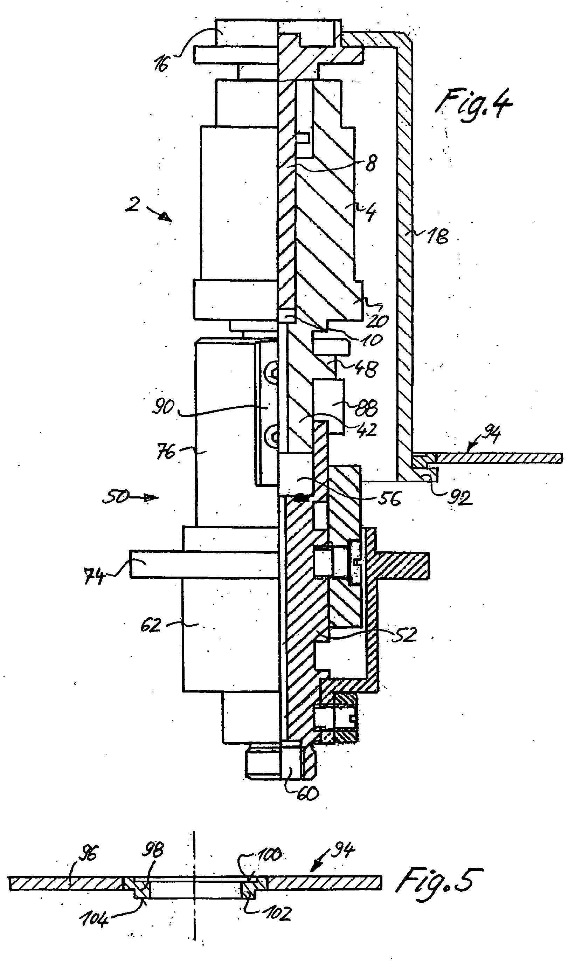

Ferner ist nahe dem oberen Ende der Spannhülse 76 eine Nut 84 ausgebildet, die auf einer Seite offen ist, so dass auf dieser offenen Seite der Nut eine Öffnung 86 vorhanden ist, wie insbesondere Figur 3 erkennen läßt. Im Übrigen ist die Nut 84 komplementär zum Bund 48 so ausgebildet, dass der Bund 48 am Zapfen 42 in die Nut 84 eingesetzt werden kann und dann mit dieser in Eingriff steht. Im Bereich des oberen Endes der Spannhülse 76 ist ferner eine Ausnehmung 88 ausgebildet, die sich auf derselben Seite der Spannhülse 76 wie die Öffnung 86 befindet und sich in Axialrichtung der Spannhülse 76 unterhalb der Nut 84 über eine Länge erstreckt, die etwas größer ist als die Länge des Zapfens 42 unterhalb des Bundes 48.

Im zusammengefügten Zustand ergeben das Kolben-Zylinder-System 2 gemäß Figur 1 und die Anschlusseinheit 50 gemäß Figur 2 eine erfindungsgemäße Kolbendruckwaage. Figur 4 zeigt das Kolben-Zylinder-System 2 und die Anschlusseinheit 50, während diese zusammengefügt werden. In Figur 4 sind gleiche bzw. entsprechende Elemente mit den gleichen Bezugszeichen wie in den Figuren 1 bis 3 bezeichnet, so dass die vorstehende Erläuterung dieser Elemente auch für die Ausführungsform gemäß Figur 4 gilt. Allerdings sind bei der Ausführungsform gemäß Figur 4 das Kolben-Zylinder-System 2 und die Anschlusseinheit 50 im Vergleich zu den Ausführungsformen gemäß den Figuren 1 bis 3 etwas abgewandelt, worauf im Folgenden noch eingegangen werden wird.

Das Kolben-Zylinder-System 2 und die Anschlusseinheit 50 werden in folgender Weise zusammengefügt. Zunächst wird die Spannhülse 76 durch Drehen relativ zum Kernelement 52 in ihre oberste Stellung gebracht. Dann wird der Zapfen 42 von derjenigen Seite der Spannhülse 76, auf der sich die Öffnung 86 und die Ausnehmung 88 befinden, d.h. senkrecht zur Zeichnungsebene von Figur 2, in die Spannhülse 76 eingeführt, bis der Bund 48 vollständig in der Nut 84 sitzt. In diesem Zustand sind der Zapfen 42 und das Zapfenloch 56 koaxial miteinander ausgerichtet. Danach wird die Spannhülse 76 mittels der Arme 82 in dem Sinne gedreht, dass sie sich am Kernelement 52 nach unten bewegt. Wegen des Eingriffs zwischen der Nut 84 und den Bund 48 wird dabei der Zapfen 42 nach unten gezogen, wobei er in das Zapfenloch 56 eintritt. Dadurch wird der in Figur 4 gezeigte Zustand erreicht, bei dem der Zapfen 42 teilweise in das Zapfenloch 56 eingeschoben ist. Durch weiteres Drehen der Spannhülse 76 wird der Zapfen 42 in das Zapfenloch 56 geschoben, bis die Stirnfläche des Zapfens 42 am Boden des Zapfenloches 56 bzw. an der dort befindlichen Ringdichtung 58 anliegt. Dadurch ist der Verbindungsvorgang zwischen dem Kolben-Zylinder-System 2 und der Anschlusseinheit 50 beendet. Aufgrund der Selbsthemmung zwischen der Führungsnut 78 und dem Führungsstift 80 werden das Kolben-Zylinder-System 2 und die Anschlusseinheit 50 zuverlässig in dem verbundenen Zustand gehalten bzw. gesichert.

Wie sich aus der vorstehenden Beschreibung ergibt, sind bei der erfindungsgemäßen Kolbendruckwaage deren Kolben-Zylinder-System 2 und deren Anschlusseinheit 50 mittels einer lösbaren Steckverbindung miteinander verbunden, die im Wesentlichen durch das Zapfenloch 56 im Kernelement 52 und den darin eingesteckten Zapfen 42 am Zylinderhalter 20 gebildet ist. Alternativ hierzu kann vorgesehen sein, dass der Zapfen am Kernelement 52 ausgebildet ist und dass das zugehörige Zapfenloch am Zylinderhalter 20 ausgebildet ist.

Wie sich ferner aus der vorstehenden Beschreibung ergibt, werden das Kolben-Zylinder-System 2 und die Anschlusseinheit 50 in ihrem zusammengefügten bzw. zusammengesteckten Zustand dadurch gehalten bzw. gesichert, dass die Nut 84 der Spannhülse 76 in Eingriff mit dem Bund 48 steht und dass die Führungsnut 78 und der Führungsstift 80 eine Selbsthemmung bilden. Bei dem beschriebenen Ausführungsbeispiel ist die Haltevorrichtung somit durch den Bund 48 und die Spannhülse 76 mit ihrer Nut 84 und ihrer Führungsnut 78 sowie den Führungsstift 80 gebildet.

Wie sich ebenfalls aus der vorstehenden Beschreibung ergibt, kann der Verbindungsvorgang zwischen dem Kolben-Zylinder-System 2 und der Anschlusseinheit 50 schnell und einfach durchgeführt werden. In umgekehrter Reihenfolge zum beschriebenen Verbindungsvorgang können das Kolben-Zylinder-System 2 und die Anschlusseinheit 50 schnell und einfach voneinander getrennt werden. Insofern bilden die Steckverbindung und die Spannhülse eine Schnellspannvorrichtung.

Wenn bei der erfindungsgemäßen Kolbendruckwaage der Kolben 8 ausgetauscht werden soll gegen einen anderen Kolben 8, der sich vom erstgenannten durch seinen Durchmesser und somit durch seine Querschnittsfläche unterscheidet, so erfolgt dies durch Austausch des gesamten Kolben-Zylinder-Systems 2 gegen ein anderes Kolben-Zylinder-System 2, das sich vom erstgenannten durch den Durchmesser des Kolbens 8 unterscheidet. Dieser Austausch kann auf beschriebene Weise schnell und einfach ausgeführt werden.

Da im Zuge des Austausches das gesamte Kolben-Zylinder-System 2 gegen ein anderes ausgetauscht wird, ist es im Zuge des Austausches nicht notwendig, das Kolben-Zylinder-System 2 zu zerlegen. Insbesondere ist es nicht notwendig, den Kolben 8 aus dem Zylinder 4 herauszuziehen. Vielmehr verbleibt der Kolben 8 stets im zugeordneten Zylinder 4, wobei der Kolben 8 im Kolben-Zylinder-System 2 geschützt angeordnet ist.

Wie die Ausführungsform gemäß Figur 4 zeigt, kann die Anschlusseinheit 50 im Vergleich zu der Anschlusseinheit gemäß Figur 2 derart abgewandelt sein, dass sich der Fluidanschluss 60 in axialer Verlängerung des Fluidkanals 54 befindet. Ferner sind bei der Ausführungsform gemäß Figur 4 statt der Arme 82 Griffleisten 90 an der Spannhülse 76 befestigt. Schließlich zeigt Figur 4, dass der Zylinderhalter 20 und der Zylinder 4 einstückig ausgebildet sein können, so dass die Zylinderhülse 32 und die Gewindehülse 36 der Ausführungsform gemäß Figur 1 entfallen können.

In Figur 4 ist die Glocke 18 gezeigt, die von oben lösbar auf den Kolbenteller 16 gesetzt ist (die linke Hälfte der Glocke 18 ist in Figur 4 nicht dargestellt). Die Glocke 18 weist an ihrem unteren Ende einen radial nach außen vorstehenden Bund 92 auf, auf den ein Gewichtskörper 94 aufgelegt ist, der als Ganzes im Schnitt in Figur 5 gezeigt ist. Wie bereits einleitend dargelegt worden ist, können gegeneinander austauschbare Gewichtskörper 94 und auch mehrere solcher Gewichtskörper gleichzeitig auf die Glocke 18 aufgelegt werden.

Wie insbesondere Figur 5 zeigt, besteht der Gewichtskörper 94 aus einem flachen Ring 96 und einer in dessen Öffnung eingepressten Buchse 98. Die Buchse 98 weist auf ihrer Oberseite eine Ausnehmung 100 und auf ihrer Unterseite einen axial vorstehenden Ringflansch 102 auf, wobei die Ausnehmung 100 und der Ringflansch 102 derart dimensioniert sind, dass in die Ausnehmung 100 von oben der Ringflansch 102 eines weiteren Gewichtskörpers eingesetzt werden kann.

Am Ringflansch 102 weist die Buchse eine Stirnseite 104 auf. An dieser Stirnseite wird, um die Masse des Gewichtskörpers 94 der Gravitationsbeschleunigung am Einsatzort der Kolbendruckwaage anzupassen, mehr oder weniger Material abgedreht. Dabei behält die Stirnseite ihre ebene und glatte Oberfläche, so dass der gesamte Gewichtskörper 94 trotz des erfolgten Massenabgleichs nur glatte Oberflächen aufweist.

Insoweit, als sich die Erfindung auf den Gewichtskörper bezieht, gehört zur Erfindung ausdrücklich auch das vorstehend beschriebene Vorgehen, d.h. das vorstehend beschriebene Verfahren, mittels dessen die Masse des Gewichtskörpers auf das aufgrund der Gravitationsbeschleunigung am Einsatzort vorgegebenes Sollmaß gebracht wird.

## Patentansprüche

1. Kolbendruckwaage, mit einem Zylinder (4), der eine axial verlaufende Kolbenbohrung (6) aufweist, einem in der Kolbenbohrung (6) verschiebbar angeordneten Kolben (8), dessen oberes Ende aus dem Zylinder (4) herausragt und einen Kolbenteller (16) trägt, einem Zylinderhalter (20), der den Zylinder (4) von unten abstützt und zusammen mit diesem eine Druckkammer (10) begrenzt, wobei der Druck eines in der Druckkammer (10) befindlichen Druckfluids auf das untere Ende des Kolbens (8) wirkt, und einer Anschlusseinheit (50), an der der Zylinderhalter (20) angeordnet ist, wobei die Anschlusseinheit (50) einen Fluidanschluss (60) zum Zuführen des Druckfluids und einen Fluidkanal (54) zum Verbinden des Fluidanschlusses (60) mit der Druckkammer (10) sowie Befestigungsmittel (74) zum Befestigen der Anschlusseinheit (50) an einem tragenden Bauteil aufweist,
und wobei
der Zylinderhalter (20) ein getrennt von der Anschlusseinheit (50) ausgebildetes Bauteil ist, **dadurch gekennzeichnet dass** der Zylinderhalter (20) und die Anschlusseinheit (50) mittels einer Steckverbindung (42, 56) verbindbar und voneinander trennbar sind, wobei die Steckverbindung (42, 56) einen Zapfen (42), der am Zylinderhalter (20) oder der Anschlusseinheit (50) ausgebildet ist, sowie ein Zapfenloch (56) aufweist, das am jeweils anderen Element von Zylinderhalter (20) und Anschlusseinheit (50) ausgebildet ist und derart komplementär zum Zapfen (42) geformt ist, dass es diesen aufnehmen kann, dass eine Haltevorrichtung (48, 76, 80) vorgesehen ist, die den Zylinderhalter (20) an der Anschlusseinheit (50) sichert, wenn der Zylinderhalter (20) und die Anschlusseinheit (50) mittels der Steckverbindung (42, 56) miteinander verbunden sind,
wobei die Haltevorrichtung (48, 76, 80) einen Bund (48), der am unteren Ende des Zylipderhalters (20) ausgebildet ist, sowie eine komplementör zu dem Bund (48) ausgebiblete Nut (84) aufweist, die an der Anschlusseinheit (50) ausgebildet ist und auf einer Seite offen ist, so dass der Bund (48) durch die seitliche Öffnung (86) der Nut (84) in diese eingeschoben werden kann, und
dass die Anschlusseinheit (50) ein zylindrisches Kernelement (52), in dem der Fluidkanal (54) und der Fluidanschluss (60) ausgebildet sind und das mit dem Zapfen oder dem Zapfenloch (56) versehen ist, sowie eine Spannhülse (76) aufweist, in der die Nut (84) ausgebildet ist, wobei die Spannhülse (76) auf dem Kernelement (52) drehbar und gleitend verschiebbar angeordnet ist und wobei in der zylindrischen Mantelfläche des Kernelementes (52) eine schraubenlinienförmige Führungsnut (78) ausgebildet ist, in die ein an der Spannhülse (76) angeordneter Führungsstift (80) eingreift, so dass die Spannhülse (76), wenn sie um das Kernelement (52) gedreht wird, zugleich in dessen Axialrichtung verschoben wird.

2. Kolbendruckwaage nach Anspruch 1, **dadurch gekennzeichnet, dass** der Zapfen (42) am Zylinderhalter (20) ausgebildet ist und eine Axialbohrung (44) aufweist, die den Fluidkanal (54) der Anschlusseinheit (50) mit der Druckkammer (10) verbindet.

3. Kolbendruckwaage nach Anspuch 1 oder 2, **dadurch gekennzeichnet, dass** der Zylinder (4) und der Zylinderhalter (20) einstückig miteinander ausgebildet sind.

4. Kolbendruckwaage nach Anspuch 1 oder 2, **dadurch gekennzeichnet, dass** am Zylinderhalter (20) eine Zylinderhülse (34) angeformt ist, in die der Zylinder (4) eingepasst ist, und dass in das obere Ende der Zylinderhülse (34) eine Gewindehülse (36) geschraubt ist, die den Zylinder (4) gegen den Zylinderhalter (20) spannt.

5. Ringförmiger Gewichtskörper für eine Kolbendruckwaag nach einem der Ansprüche 1 bis 4, **dadurch gekennzeichnet, dass** der Gewichtskörper (94) aus einem flachen Ring (96) und einer Buchse (98) besteht, die in die Öffnung des flachen Rings (96) eingepresst ist, wobei eine der Stirnseiten (104) der Buchse (98) dazu bestimmt ist, dass an dieser Stirnseite (104) Material abgedreht wird, um **dadurch** die Masse des Gewichtskörpers (94) auf ein vorgegebenes Sollmaß zu bringen.

## Revendications

1. Balance à pression de piston comportant un cylindre (4), muni d'un alésage pour piston (6) orienté dans le sens axial, un piston (8), qui est monté mobile dans l'alésage (6) et dont l'extrémité supérieure s'avance hors du cylindre (4) et porte un plateau de piston (16), un porte-cylindre (20) qui constitue un appui par le bas pour le cylindre (4) et délimite conjointement avec celui-ci une chambre de pression (10), la pression d'un fluide comprimé contenu dans la chambre de pression (10) s'exerçant sur l'extrémité inférieure du piston (8), et une unité de raccordement (50), contre laquelle est agencé le porte-cylindre (20), l'unité de raccordement (50) comportant un raccord pour fluide (60) destiné à l'admission du fluide comprimé et un conduit pour fluide (54) destiné à relier le raccord pour fluide (60) avec la chambre de pression (10), ainsi que des moyens de fixation (74) pour fixer l'unité de raccordement (50) sur une pièce de support, et le porte-cylindre (20) étant une pièce réalisée séparément de l'unité de raccordement (50),
**caractérisée en ce que** le porte-cylindre (20) et l'unité de raccordement (50) peuvent être assemblés l'un à l'autre et séparés l'un de l'autre au moyen d'un assemblage par enfichage (42, 56), l'assemblage par enfichage (42, 56) étant formé par une queue (42), qui est formée sur le porte-cylindre (20) ou sur l'unité de raccordement (50), ainsi que par un trou (56) qui est ménagé sur respectivement l'autre élément, à savoir le porte-cylindre (20) et l'unité de raccordement (50), et est réalisé avec une forme complémentaire à la queue (42) de manière à pouvoir recevoir celle-ci,
**en ce qu'**il est prévu un dispositif de retenue (48, 76, 80), par lequel le porte-cylindre (20) est bloqué contre l'unité de raccordement (50) lorsque le porte-cylindre (20) et l'unité de raccordement (50) sont assemblés l'un à l'autre au moyen de l'assemblage par enfichage (42, 56), le dispositif de retenue (48, 76, 80) comportant une collerette (48), qui est réalisée sur l'extrémité inférieure du porte-cylindre (20), ainsi qu'une rainure (84), qui est réalisée avec une forme complémentaire à la collerette (48) et est formée sur l'unité de raccordement (50) et est ouverte sur un côté, de telle sorte que la collerette (48) peut être insérée par l'ouverture latérale (86) de la rainure (84) dans celle-ci,
et **en ce que** l'unité de raccordement (50) comporte un élément central (52) cylindrique, dans lequel sont réalisés le conduit pour fluide (54) et le raccord pour fluide (60) et qui est muni de la queue ou du trou (56), ainsi qu'une douille de serrage (76), dans laquelle est réalisée la rainure (84), la douille de serrage (76) étant montée rotative et mobile par glissement sur l'élément central (52), et une rainure de guidage (78) hélicoïdale étant réalisée dans la paroi latérale cylindrique de l'élément central (52), dans laquelle s'engage un téton de guidage (80), formé sur la douille de serrage (76), de telle sorte que la douille de serrage (76) lorsqu'on la fait tourner autour de l'élément central (52) se déplace en même temps dans le sens axial de celui-ci.

2. Balance à pression de piston selon la revendication 1, **caractérisée en ce que** la queue (42) est réalisée sur le porte-cylindre (20) et comporte une forure axiale (44), par laquelle le conduit pour fluide (54) de l'unité de raccordement (50) communique avec la chambre de pression (10).

3. Balance à pression de piston selon la revendication 1 ou 2, **caractérisée en ce que** le cylindre (4) et le porte-cylindre (20) sont réalisés d'un seul tenant l'un avec l'autre.

4. Balance à pression de piston selon la revendication 1 ou 2, **caractérisée en ce qu'**une gaine pour cylindre (34) est formée sur le porte-cylindre (20), dans laquelle est ajusté le cylindre (4), et **en ce qu'**une douille filetée (36), qui pousse le cylindre (4) contre le porte-cylindre (20), est formée sur l'extrémité supérieure de la gaine pour cylindre (34).

5. Poids en forme de corps annulaire pour une balance à pression de piston selon l'une quelconque des revendications 1 à 4, **caractérisé en ce que** le poids (94) est formé par une bague (96) plate et une douille (98), qui est pressée dans l'ouverture de la bague (96) plate, une des faces frontales (104) de la douille (98) étant déterminée pour un enlèvement de matière sur cette face frontale (104) afin d'amener ainsi la masse du poids (94) à une valeur de consigne prédéfinie.

## Claims

1. A piston gauge, having a cylinder (4), which comprises an axially extending piston bore (6), a piston (8) arranged displaceably in the piston bore (6), whose upper end projects out of the cylinder (4) and bears a piston plate (16), a cylinder mount (20), which supports the cylinder (4) from below and together therewith defines a pressure chamber (10), the pressure of a pressure fluid located in the pressure chamber (10) acting on the lower end of the piston (8), and a connection unit (50), on which the cylinder mount (20) is arranged, the connection unit (50) comprising a fluid connection (60) for supplying the pressure fluid and a fluid duct (54) for connecting the fluid connection (60) with the pressure chamber (10) and attachment means (74) for attaching the connection unit (50) to a supporting component, and the cylinder mount (20) being a component constructed separately from the connection unit (50), **characterised in that** the cylinder mount (20) and the connection unit (50) may be connected and separated from one another by means of a plug-in connection (42, 56), the plug-in connection (42, 56) comprising a peg (42), which is provided on the cylinder mount (20) or the connection unit (50), and a peg hole (56), which is provided on the respective other one of the cylinder mount (20) and connection unit (50) and is so shaped, complementarily to the peg (42), that it may accommodate the latter, **in that** a retaining device (48, 76, 80) is provided, which secures the cylinder mount (20) to the connection unit (50) when the cylinder mount (20) and the connection unit (50) have been connected together by means of the plug-in connection (42, 56), the retaining device (48, 76, 80) comprising a shoulder (48), which is provided at the lower end of the cylinder mount (20), and a groove (84) of complementary construction to the shoulder (48), which groove (84) is provided on the connection unit (50) and is open on one side, such that the shoulder (48) may be inserted into the groove (84) through the lateral opening (86) thereof, and **in that** the connection unit (50) comprises a cylindrical core element (52), in which the fluid duct (54) and the fluid connection (60) are formed and which is provided with the peg or the peg hole (56), and an adapter sleeve (76), in which the groove (84) is formed, wherein the adapter sleeve (76) is arranged rotatably and slidingly on the core element (52) and wherein a helical guide groove (78) is formed in the cylindrical lateral surface of the core element (52), in which guide groove (78) there engages a guide pin (80) arranged on the adapter sleeve (76), such that the adapter sleeve (76), when turned around the core element (52), is displaced at the same time in the axial direction thereof.

2. A piston gauge according to claim 1, **characterised in that** the peg (42) is provided on the cylinder mount (20) and comprises an axial bore (44), which connects the fluid duct (54) of the connection unit (50) with the pressure chamber (10).

3. A piston gauge according to claim 1 or claim 2, **characterised in that** the cylinder (4) and the cylinder mount (20) are made in one piece with one another.

4. A piston gauge according to claim 1 or claim 2, **characterised in that** a cylinder sleeve (34) is formed on the cylinder mount (20), into which cylinder sleeve (34) is fitted the cylinder (4), and **in that** a threaded sleeve (36) is screwed into the upper end of the cylinder sleeve (34), which threaded sleeve (36) stresses the cylinder (4) against the cylinder mount (20).

5. An annular weight for a piston gauge according to any one of claims 1 to 4, **characterised in that** the weight (94) consists of a flat ring (96) and a bush (98) which is pressed into the opening in the flat ring (96), wherein one of the end faces (104) of the bush (98) is so designed that material may be removed by lathe from this end face (104) to bring the mass of the weight (94) to a specified nominal level.
